# FASCICULE DE BREVET EUROPEEN

(11) **EP 4 349 715 B1**
(45) Date de publication et mention de la délivrance du brevet: **11.06.2025**
(21) Numéro de dépôt: 23197755.4
(22) Date de dépôt: 15.09.2023
(51) Int. Cl.: B64D 37/00, B64D 37/02, B64D 37/08

(54) **RÉSERVOIR DE CARBURANT POUR AÉRONEF**
KRAFTSTOFFTANK FÜR EIN FLUGZEUG
FUEL TANK FOR AIRCRAFT

(30) Priorité: 07.10.2022 FR 2210281
(43) Date de publication de la demande: 10.04.2024
(73) Titulaire: AIRBUS OPERATIONS (S.A.S.), 31060 Toulouse (FR)
(72) Inventeur: SICK, Frédéric, 31060 TOULOUSE (FR)
(74) Mandataire: Airbus-OPS SAS

(56) Documents cités:
- RU-C1- 2 323 134
- US-A1- 2005 166 967
- US-A1- 2011 272 526
- US-A1- 2021 347 252

## Description

L'invention est relative au domaine du stockage de carburant à bord d'un aéronef. Un aéronef comporte généralement au moins un réservoir de carburant prévu pour stocker du kérosène ou de l'hydrogène liquide, en particulier pour alimenter en énergie un système de propulsion de l'aéronef. Un tel réservoir est par exemple de forme allongée, par exemple cylindrique. Une pompe de carburant est généralement associée au réservoir de façon à permettre la fourniture de carburant à un système utilisateur tel qu'un moteur de propulsion ou une pile à combustible. Pour cela, la pompe de carburant est raccordée en entrée à un tuyau dont une extrémité libre est située en partie inférieure du réservoir. Lorsque l'aéronef est posé au sol ou lorsqu'il vole de façon horizontale, le réservoir est généralement en position horizontale. Tant qu'il reste du carburant dans le réservoir, l'extrémité libre du tuyau est recouverte de carburant de telle façon que la pompe ne risque pas d'aspirer de l'air. Toutefois, dans certaines phases de vol de l'aéronef, en particulier en phase de décollage, en phase d'atterrissage ou encore lors de manœuvres de l'aéronef, l'aéronef ainsi que le réservoir peuvent être inclinés. L'extrémité libre du tuyau peut alors ne pas être recouverte de carburant et la pompe risque alors d'aspirer de l'air, ce qu'il convient d'éviter d'une part pour éviter de détériorer la pompe et d'autre part pour permettre la continuité de l'alimentation en carburant du système utilisateur.

Le document US 2021/347252 A1 décrit selon son résumé un système d'aspiration pour un réservoir de liquide, le réservoir étant défini par des parois latérales et une paroi de fond, le système comprenant une couche de matériau perméable, et le système comprend des moyens de fixation pour fixer ladite couche perméable sur au moins une paroi dudit réservoir. Le système comprend aussi des moyens d'aspiration dudit liquide disposés à l'intérieur de ladite couche perméable et des moyens de raccordement de ces moyens d'aspiration à un conduit d'aspiration pour aspirer ledit liquide. Un volume interne est défini entre ladite couche de matériau perméable, lesdits moyens de fixation et ladite au moins une paroi dudit réservoir, le liquide étant aspiré dans ledit volume interne à travers ladite couche de matériau perméable et lesdits moyens d'aspiration.

### EXPOSE DE L'INVENTION :

La présente invention a notamment pour but d'apporter une solution à ce problème. Elle concerne un réservoir de carburant pour aéronef selon la revendication 1.

Ainsi, lorsque la première extrémité d'un des tuyaux n'est pas recouverte de carburant du fait d'une inclinaison du réservoir, le capteur de niveau de carburant associé à ce tuyau détecte un niveau bas de carburant et la vanne associée à ce tuyau est commandée en position fermée par le système de commande. Cela permet d'éviter que de l'air soit aspiré par la première extrémité du tuyau. De plus, étant donné que les premières extrémités des différents tuyaux sont réparties sur la partie inférieure du réservoir, tant qu'il reste du carburant dans le réservoir l'extrémité d'au moins l'un des tuyaux est recouverte de carburant. Par conséquent, la vanne associée à ce tuyau est commandée en position ouverte par le système de commande, ce qui permet d'assurer la continuité de fourniture de carburant à un système utilisateur.

Selon différents modes de réalisation pouvant être pris isolément ou en combinaison :
- le réservoir est de forme allongée selon une longueur dudit réservoir et l'ensemble de tuyaux comprend au moins quatre tuyaux dont un premier tuyau dont la première extrémité est située à proximité d'une première extrémité de ladite longueur, un deuxième tuyau dont la première extrémité est située à proximité d'une deuxième extrémité de la longueur, opposée à la première extrémité de ladite longueur, et deux autres tuyaux dont les premières extrémités sont situées de part et d'autre du milieu de la longueur du réservoir. De façon avantageuse, lesdites premières extrémités des deux autres tuyaux sont en outre situées de part et d'autre d'un axe longitudinal du réservoir ;

- la partie inférieure du réservoir est conformée de façon à comporter un point bas à l'emplacement de la première extrémité d'au moins l'un des tuyaux de l'ensemble de tuyaux ;
- le réservoir comprend une cloison recouvrant partiellement la partie inférieure du réservoir et espacée d'une paroi inférieure du réservoir de telle façon que les premières extrémités des tuyaux ainsi que les capteurs de niveau soient situés entre la paroi inférieure du réservoir et ladite cloison. De façon particulière, la cloison est équipée d'une vanne prévue pour permettre l'évacuation vers une partie supérieure du réservoir, de gaz contenu entre la paroi inférieure du réservoir et ladite cloison ;
- le réservoir comprend un ensemble de parois s'étendant chacune entre la cloison et la paroi inférieure réservoir. De façon particulière, les parois de l'ensemble de parois délimitent des sous-volumes du réservoir entre la cloison et la paroi inférieure du réservoir, le nombre de sous-volumes étant égal au nombre de tuyaux de l'ensemble de tuyaux.

L'invention est également relative à un aéronef comprenant un tel réservoir.

### DESCRIPTION DETAILLEE :

L'invention sera mieux comprise à la lecture de la description qui suit et à l'examen des figures annexées.
La figure 1 illustre un aéronef équipé d'un réservoir de carburant.
La figure 2 est un schéma fonctionnel d'un réservoir de carburant conforme à un mode de réalisation de l'invention.
La figure 3 est une vue de détail de la partie inférieure du réservoir, illustrant un mode particulier de réalisation de l'invention.
La figure 4, similaire à la figure 2, est un schéma fonctionnel d'un réservoir de carburant conforme à un mode de réalisation de l'invention.

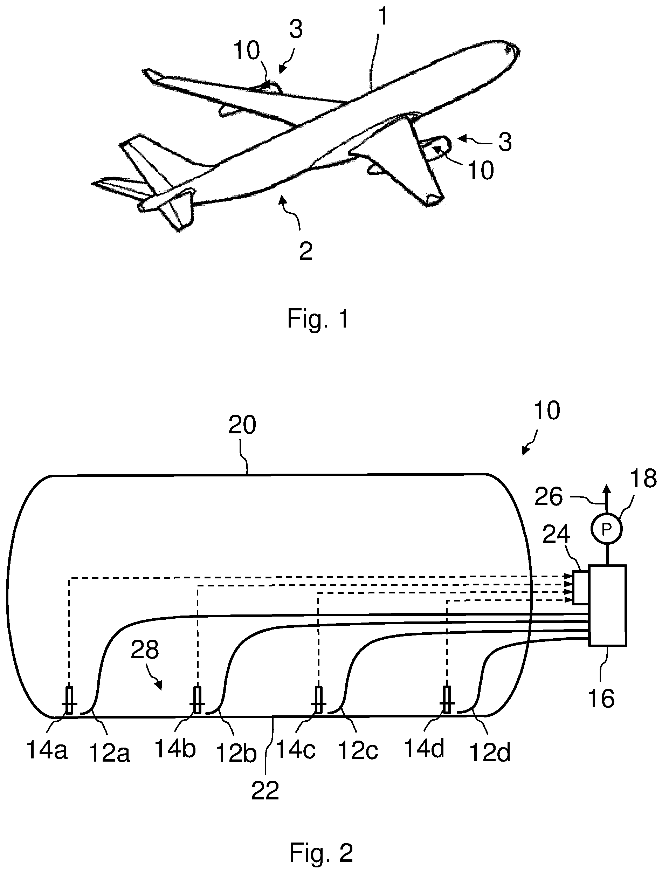

Le réservoir 10 représenté sur la figure 2 comprend une coque 20 prévue pour stocker du carburant, en particulier du kérosène ou de l'hydrogène. Lorsque le carburant correspond à de l'hydrogène, celui-ci est par exemple stocké à l'état liquide dans le réservoir 10, à une température inférieure ou égale à -253°C. Le réservoir 10 est alors un réservoir dit cryogénique de type à double coque, comprenant une coque interne et une coque externe entre lesquelles est disposé un isolant thermique. La coque 20 représentée sur la figure 2 correspond alors à la coque interne du réservoir. Sur la figure, le réservoir est représenté dans une position correspondant à celle qu'il occupe lorsque l'aéronef est posé au sol ou lorsqu'il vole de façon horizontale. Une paroi inférieure 22 de la coque du réservoir est alors horizontale ou sensiblement horizontale.

Le réservoir 10 comprend un ensemble de tuyaux comprenant au moins deux tuyaux 12a, 12d, une première extrémité de chaque tuyau étant disposée dans une partie inférieure 28 du réservoir, les premières extrémités des différents tuyaux de l'ensemble de tuyaux étant réparties sur la partie inférieure 28 du réservoir.

Le réservoir 10 comprend également une pompe de carburant 18 et un collecteur 16 (« manifold » en anglais) auquel sont reliées en entrée des deuxièmes extrémités des différents tuyaux 12a, 12d de l'ensemble de tuyaux, une sortie du collecteur étant raccordée à la pompe de carburant 18.

Le réservoir 10 comprend aussi un ensemble de capteurs de niveau de carburant 14a, 14d. Un capteur de niveau de carburant est associé à chaque tuyau 12a, 12d de l'ensemble de tuyaux et placé à proximité de la première extrémité dudit tuyau.

Le réservoir 10 comprend en outre un système de commande 24. Le système de commande 24 est relié en entrée aux différents capteurs de niveau 14a, 14d. Le réservoir 10 comprend également une vanne associée à chaque tuyau, cette vanne étant commandée par le système de commande 24 de telle façon que lorsque le capteur de niveau de carburant 14a, 14d associé à ce tuyau détecte un niveau bas de carburant, la vanne est commandée en position fermée et sinon la vanne est commandée en position ouverte. Selon une première alternative, les différentes vannes sont intégrées au collecteur 16, comme dans le mode de réalisation représenté sur la figure 2. Elles ne sont pas représentées sur la figure afin de ne pas la surcharger. Selon une autre alternative, les vannes sont montées en série sur les tuyaux auxquels elles sont associées.

En fonctionnement, lorsque l'aéronef est en position sensiblement horizontale, que ce soit en vol ou au sol, la paroi inférieure 22 ainsi que la partie inférieure 28 du réservoir sont horizontales ou sensiblement horizontales. Par conséquent, tant qu'il reste suffisamment de carburant dans le réservoir, les premières extrémités des différents tuyaux 12a, 12d de l'ensemble de tuyaux sont recouvertes de carburant et aucun des capteurs de niveau 14a, 14d ne détecte un niveau bas de carburant. Par conséquent, le système de commande 24 commande les différentes vannes associées à ces tuyaux en position ouverte, de telle façon que lorsque la pompe 18 est en fonctionnement, du carburant est aspiré dans le réservoir par chacun desdits tuyaux. Le carburant arrive à la pompe 18 via les tuyaux 12a, 12d et le collecteur 16. En sortie de la pompe, le carburant est transmis au système utilisateur via une canalisation 26.

Lorsque le réservoir 10 est incliné du fait d'une inclinaison de l'aéronef dans certaines phases de vol de l'aéronef, la première extrémité d'au moins l'un des tuyaux n'est plus recouverte de carburant. Le capteur de niveau associé à ce tuyau détecte alors un niveau bas de carburant. Par conséquent, le système de commande 24 commande la fermeture de la vanne associée à ce tuyau. Par conséquent, lorsque la pompe 18 est en fonctionnement, de l'air ne risque pas d'être aspiré par la première extrémité dudit tuyau. Cela permet de garantir le bon fonctionnement de la pompe et du système utilisateur puisque la pompe 18 ne risque pas d'aspirer de l'air. D'autre part, étant donné que le réservoir est incliné et que les premières extrémités des différents tuyaux 12a, 12d sont réparties sur la partie inférieure 28 du réservoir, la première extrémité d'au moins l'un des tuyaux de l'ensemble de tuyaux est recouverte de carburant. Par conséquent, comme déjà expliqué lorsque le réservoir 10 est en position horizontale, la vanne associée à ce tuyau est commandée en position ouverte par le système de commande 24 et la pompe 18 aspire du carburant dans le réservoir par ledit tuyau. Cela permet de garantir la continuité de fourniture de carburant au système utilisateur.

Dans un mode particulier de réalisation, comme illustré sur la figure 2, la coque 20 du réservoir est de forme allongée selon une longueur dudit réservoir, en particulier de forme cylindrique, fermée à ses extrémités par deux dômes. L'ensemble de tuyaux comprend par exemple quatre tuyaux 12a, 12b, 12c, 12d. La première extrémité d'un premier tuyau 12a est située à proximité d'une première extrémité de ladite longueur. La première extrémité d'un deuxième tuyau 12d est située à proximité d'une deuxième extrémité de la longueur, opposée à la première extrémité de ladite longueur. Les premières extrémités de deux autres tuyaux 12b et 12c sont situées de part et d'autre du milieu de la longueur du réservoir, entre les premières extrémités du premier tuyau 12a et du deuxième tuyau 12d. Les premières extrémités des différents tuyaux de l'ensemble de tuyaux sont ainsi réparties sur la partie inférieure 28 du réservoir selon sa longueur, ce qui permet de garantir que la première extrémité d'au moins l'un desdits tuyaux est toujours recouverte de carburant lorsque le réservoir 10 est incliné et qu'il reste suffisamment de carburant dans le réservoir. De façon particulière, les premières extrémités des deux autres tuyaux 12b et 12c sont en outre situées de part et d'autre d'un axe longitudinal du réservoir (c'est-à-dire de part et d'autre du plan de la figure). Cela permet de garantir que la première extrémité d'au moins l'un des deux autres tuyaux 12b, 12c est toujours recouverte de carburant lorsque le réservoir 10 est incliné latéralement (par exemple du fait d'un mouvement de roulis de l'aéronef) et qu'il reste suffisamment de carburant dans le réservoir.

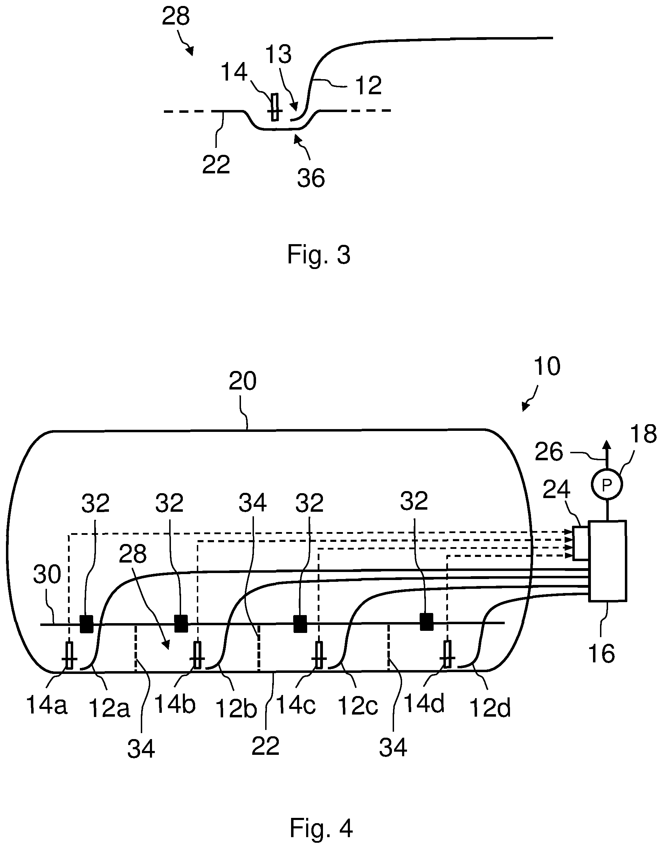

Dans le mode de réalisation illustré sur la figure 3, la partie inférieure 28 du réservoir est conformée de façon à comporter un point bas 36 à l'emplacement de la première extrémité 13 d'au moins l'un des tuyaux 12 de l'ensemble de tuyaux 12a ... 12d. De façon particulière, le point bas 36 correspond à un bossage orienté vers le bas, pratiqué dans la paroi inférieure 22 du réservoir 10. De préférence, le point bas est conformé pour recevoir la première extrémité 13 du tuyau 12, ainsi qu'au moins une partie inférieure du capteur de niveau 14 associé à ce tuyau. Le fait d'avoir un tel point bas 36 à l'emplacement de la première extrémité du tuyau 12 permet de faciliter la convergence du carburant vers ladite première extrémité du tuyau, même lorsqu'il reste peu de carburant dans le réservoir.

Dans un mode de réalisation illustré sur la figure 4, le réservoir comprend une cloison 30 recouvrant partiellement la partie inférieure 28 du réservoir et espacée de la paroi inférieure 22 du réservoir de telle façon que les premières extrémités des tuyaux ainsi que les capteurs de niveau soient situés entre la paroi inférieure 22 du réservoir et ladite cloison 30. La cloison 30 a pour effet d'empêcher le carburant contenu sous cette cloison de se déplacer brusquement vers le haut lors d'une réduction rapide de la force de gravité pouvant survenir pendant le vol de l'aéronef, voire même lorsque le carburant est soumis à une force d'accélération orientée vers le haut. Grâce à cette cloison 30, le carburant est alors maintenu dans la partie inférieure 28 du réservoir de telle sorte que la première extrémité d'au moins l'un des tuyaux reste recouverte par le carburant. Cela permet de garantir la continuité du pompage de carburant par la pompe 18 et donc la fourniture de carburant au système utilisateur. La cloison 30 ne recouvre la partie inférieure 28 du réservoir que de façon partielle, de façon à permettre le remplissage en carburant de ladite partie inférieure. De façon particulière, la cloison 30 est non jointive de la coque 20 du réservoir de telle façon que le carburant peut s'écouler entre cette coque 20 et un bord de la cloison 30 pour remplir la partie inférieure 28 du réservoir. De façon préférée, la cloison 30 est équipée d'au moins une vanne 32 prévue pour permettre l'évacuation vers une partie supérieure du réservoir, de gaz contenu entre la paroi inférieure 22 du réservoir et ladite cloison 30. Cela permet d'éviter l'accumulation de gaz dans la partie inférieure 28 du réservoir, sous la cloison 30, en particulier du fait d'une évaporation d'une partie du carburant. Cela contribue encore à garantir que la première extrémité d'au moins l'un des tuyaux reste recouverte par le carburant et donc à garantir la continuité du pompage de carburant par la pompe 18 et donc la fourniture de carburant au système utilisateur. Dans un mode particulier de réalisation, le réservoir comprend un ensemble de parois 34 s'étendant chacune entre la cloison 30 et la paroi inférieure 22 du réservoir. Ces parois 34 permettent d'éviter des mouvements brusques du carburant dans la partie inférieure 28 du réservoir lors de mouvements de l'aéronef. Elles contribuent donc à éviter que les premières extrémités de certains tuyaux ne soient plus recouvertes de carburant dans une telle situation. De façon particulière, les parois de l'ensemble de parois 34 délimitent des sous-volumes du réservoir entre la cloison 30 et la paroi inférieure 22 du réservoir, le nombre de sous-volumes étant égal au nombre de tuyaux de l'ensemble de tuyaux comme illustré sur la figure 4. De façon avantageuse, les parois 34 ne délimitent pas ces sous-volumes de façon étanche, de telle façon que le carburant peut se répartir entre ces sous-volumes, mais sans mouvements brusques. Pour cela, certaines parois comportent par exemple des orifices permettant la circulation du carburant, ou encore le réservoir comprend des parois 34 décalées de façon à permettre la répartition du carburant entre les sous-volumes tout en limitant les mouvements brusques du carburant selon la longueur du réservoir.

De façon non limitative de l'invention, le réservoir 10 de carburant est par exemple intégré dans une nacelle d'un moteur 3 de propulsion de l'aéronef 1 comme représenté sur la figure 1. Ce moteur est alors soit un moteur à combustion utilisant le carburant comme source d'énergie, soit un moteur électrique alimenté électriquement par des piles à combustible utilisant le carburant, en particulier de l'hydrogène, comme source d'énergie. Dans un autre exemple de réalisation, le réservoir 10 de carburant est intégré dans un fuselage 2 de l'aéronef, en particulier dans une partie arrière du fuselage.

## Revendications

1. Réservoir de carburant (10) pour aéronef (1), comprenant un système de pompage de carburant dans ledit réservoir, le système de pompage de carburant comprenant :
- un ensemble de tuyaux (12a ... 12d) comprenant au moins deux tuyaux, une première extrémité de chaque tuyau étant disposée en partie inférieure (28) du réservoir, les premières extrémités des différents tuyaux de l'ensemble de tuyaux étant réparties sur la partie inférieure (28) du réservoir ;
- une pompe de carburant (18) ; et
- un collecteur (16) auquel sont reliées en entrée des deuxièmes extrémités des différents tuyaux (12a ... 12d) de l'ensemble de tuyaux, une sortie du collecteur étant raccordée à la pompe de carburant,
le système de pompage de carburant comprenant en outre :
- un ensemble de capteurs de niveau de carburant (14a ... 14d) tels qu'un capteur de niveau de carburant est associé à chaque tuyau de l'ensemble de tuyaux et placé à proximité de la première extrémité dudit tuyau ; et
- une vanne associée à chaque tuyau, cette vanne étant commandée par un système de commande (24) de telle façon que lorsque le capteur de niveau de carburant associé à ce tuyau détecte un niveau bas de carburant, la vanne est commandée en position fermée et sinon la vanne est commandée en position ouverte,
le réservoir comprenant en plus une cloison (30) recouvrant partiellement la partie inférieure (28) du réservoir et espacée d'une paroi inférieure (22) du réservoir de telle façon que les premières extrémités des tuyaux ainsi que les capteurs de niveau soient situés entre la paroi inférieure (22) du réservoir et ladite cloison (30),
la cloison étant équipée d'une vanne (32) prévue pour permettre l'évacuation vers une partie supérieure du réservoir, de gaz contenu entre la paroi inférieure (22) du réservoir et ladite cloison (30).

2. Réservoir selon la revendication 1, **caractérisé en ce qu'**il est de forme allongée selon une longueur dudit réservoir et l'ensemble de tuyaux comprend au moins quatre tuyaux dont un premier tuyau (12a) dont la première extrémité est située à proximité d'une première extrémité de ladite longueur, un deuxième tuyau (12d) dont la première extrémité est située à proximité d'une deuxième extrémité de la longueur, opposée à la première extrémité de ladite longueur, et deux autres tuyaux (12b, 12c) dont les premières extrémités sont situées de part et d'autre du milieu de la longueur du réservoir.

3. Réservoir selon la revendication précédente, **caractérisé en ce que** les premières extrémités des deux autres tuyaux (12b, 12c) sont en outre situées de part et d'autre d'un axe longitudinal du réservoir.

4. Réservoir selon l'une quelconque des revendications précédentes, **caractérisé en ce que** la partie inférieure (28) du réservoir est conformée de façon à comporter un point bas (36) à l'emplacement de la première extrémité (13) d'au moins l'un des tuyaux (12) de l'ensemble de tuyaux.

5. Réservoir selon l'une quelconque des revendications précédentes, **caractérisé en ce que** le réservoir comprend un ensemble de parois (34) s'étendant chacune entre la cloison (30) et la paroi inférieure (22) réservoir.

6. Réservoir selon la revendication précédente, **caractérisé en ce que** les parois (34) de l'ensemble de parois délimitent des sous-volumes du réservoir entre la cloison (30) et la paroi inférieure (22) du réservoir, le nombre de sous-volumes étant égal au nombre de tuyaux de l'ensemble de tuyaux.

7. Aéronef (1), **caractérisé en ce qu'**il comprend un réservoir (10) selon l'une quelconque des revendications précédentes.

## Patentansprüche

1. Kraftstofftank (10) für ein Luftfahrzeug (1), welches ein Kraftstoffpumpsystem in dem Tank umfasst, wobei das Kraftstoffpumpsystem umfasst:
- eine Rohranordnung (12a **...** 12d), die mindestens zwei Rohre umfasst, wobei ein erstes Ende jedes Rohres im unteren Teil (28) des Tanks angeordnet ist, wobei die ersten Enden der verschiedenen Rohre der Rohranordnung auf dem unteren Teil (28) des Tanks verteilt sind;
- eine Kraftstoffpumpe (18); und
- einen Sammler (16), mit dem am Eingang zweite Enden der verschiedenen Rohre (12a ... 12d) der Rohranordnung verbunden sind, wobei ein Ausgang des Sammlers an die Kraftstoffpumpe angeschlossen ist, wobei das Kraftstoffpumpsystem außerdem umfasst:
- eine Anordnung von Kraftstoffpegelsensoren (14a **...** 14d), wobei jedem Rohr der Rohranordnung ein Kraftstoffpegelsensor zugeordnet und in der Nähe des ersten Endes des Rohres angeordnet ist; und
- jeweils ein Ventil, das jedem Rohr zugeordnet ist, wobei dieses Ventil von einem Steuerungssystem (24) derart gesteuert wird, dass, wenn der diesem Rohr zugeordnete Kraftstoffpegelsensor einen niedrigen Kraftstoffpegel erkennt, das Ventil in eine geschlossene Position gesteuert wird und andernfalls das Ventil in eine geöffnete Position gesteuert wird, wobei der Tank außerdem eine Trennwand (30) umfasst, die den unteren Teil (28) des Tanks teilweise bedeckt und von einer unteren Wand (22) des Tanks beabstandet ist, derart, dass sich die ersten Enden der Rohre sowie die Pegelsensoren zwischen der unteren Wand (22) des Tanks und der Trennwand (30) befinden, wobei die Trennwand mit einem Ventil (32) ausgestattet ist, das dafür vorgesehen ist, das Auslassen von Gas, das zwischen der unteren Wand (22) des Tanks und der Trennwand (30) enthalten ist, zu einem oberen Teil des Tanks hin zu ermöglichen.

2. Tank nach Anspruch 1, **dadurch gekennzeichnet, dass** er von lang gestreckter Form entlang einer Länge des Tanks ist und die Rohranordnung mindestens vier Rohre umfasst, darunter ein erstes Rohr (12a), dessen erstes Ende sich in der Nähe eines ersten Endes der Länge befindet, ein zweites Rohr (12d), dessen erstes Ende sich in der Nähe eines zweiten Endes der Länge befindet, das dem ersten Ende der Länge gegenüberliegt, und zwei weitere Rohre (12b, 12c), deren erste Enden sich beiderseits der Mitte der Länge des Tanks befinden.

3. Tank nach dem vorhergehenden Anspruch, **dadurch gekennzeichnet, dass** sich die ersten Enden der zwei weiteren Rohre (12b, 12c) außerdem beiderseits einer Längsachse des Tanks befinden.

4. Tank nach einem der vorhergehenden Ansprüche, **dadurch gekennzeichnet, dass** der untere Teil (28) des Tanks so geformt ist, dass er einen untersten Punkt (36) am Ort des ersten Endes (13) mindestens eines der Rohre (12) der Rohranordnung aufweist.

5. Tank nach einem der vorhergehenden Ansprüche, **dadurch gekennzeichnet, dass** der Tank eine Anordnung von Wänden (34) umfasst, die sich jeweils zwischen der Trennwand (30) und der unteren Wand (22) des Tanks erstrecken.

6. Tank nach dem vorhergehenden Anspruch, **dadurch gekennzeichnet, dass** die Wände (34) der Anordnung von Wänden Teilvolumina des Tanks zwischen der Trennwand (30) und der unteren Wand (22) des Tanks begrenzen, wobei die Anzahl der Teilvolumina gleich der Anzahl der Rohre der Rohranordnung ist.

7. Luftfahrzeug (1), **dadurch gekennzeichnet, dass** es einen Tank (10) nach einem der vorhergehenden Ansprüche umfasst.

## Claims

1. Fuel tank (10) for an aircraft (1), comprising a fuel pumping system in said tank, the fuel pumping system comprising:
- a set of hoses (12a **...** 12d) comprising at least two hoses, a first end of each hose being disposed in a lower part (28) of the tank, the first ends of the different hoses of the set of hoses being distributed over the lower part (28) of the tank;
- a fuel pump (18); and
- a manifold (16) to which second ends of the different hoses (12a **...** 12d) of the set of hoses are connected as input, an outlet of the manifold being connected to the fuel pump, the fuel pumping system further comprising:
- a set of fuel level sensors (14a **...** 14d) such that a fuel level sensor is associated with each hose of the set of hoses and is placed in the vicinity of the first end of said hose; and
- a valve associated with each hose, this valve being controlled by a control system (24) in such a way that when the fuel level sensor associated with this hose detects a low fuel level, the valve is controlled into a closed position, and otherwise the valve is controlled into an open position, the tank additionally comprising a partition (30) which partially covers the lower part (28) of the tank and which is spaced apart from a lower wall (22) of the tank in such a way that the first ends of the hoses and the level sensors are situated between the lower wall (22) of the tank and said partition (30), the partition being equipped with a valve (32) provided to allow gas contained between the lower wall (22) of the tank and said partition (30) to be discharged to an upper part of the tank.

2. Tank according to Claim 1, **characterized in that** it is of elongate form along a length of said tank and the set of hoses comprises at least four hoses including a first hose (12a) whose first end is situated in the vicinity of a first end of said length, a second hose (12d) whose first end is situated in the vicinity of a second end of the length, opposite the first end of said length, and two other hoses (12b, 12c) whose first ends are situated on either side of the middle of the length of the tank.

3. Tank according to the preceding claim, **characterized in that** the first ends of the two other hoses (12b, 12c) are also situated on either side of a longitudinal axis of the tank.

4. Tank according to any one of the preceding claims, **characterized in that** the lower part (28) of the tank is shaped so as to have a low point (36) at the location of the first end (13) of at least one of the hoses (12) of the set of hoses.

5. Tank according to any one of the preceding claims, **characterized in that** the tank comprises a set of walls (34) each extending between the partition (30) and the lower tank wall (22).

6. Tank according to the preceding claim, **characterized in that** the walls (34) of the set of walls delimit sub-volumes of the tank between the partition (30) and the lower wall (22) of the tank, the number of sub-volumes being equal to the number of hoses of the set of hoses.

7. Aircraft (1), **characterized in that** it comprises a tank (10) according to any one of the preceding claims.
